# EUROPEAN PATENT APPLICATION

(11) **EP 4 171 097 A1**
(43) Date of publication of application: **26.04.2023**
(21) Application number: 21829298.5
(22) Date of filing: 18.06.2021
(51) Int. Cl.: H04W 24/02, H04W 40/22

(54) **RELAY DETERMINATION AND CONFIGURATION METHODS AND APPARATUSES, TERMINAL, AND NETWORK SIDE DEVICE**

(30) Priority: 22.06.2020 CN 202010576287
(71) Applicant: Vivo Mobile Communication Co., Ltd., Dongguan, Guangdong 523863 (CN)
(72) Inventor: LIU, Jiamin, Dongguan, Guangdong 523863 (CN)
(74) Representative: Lavoix
(86) International application number: PCT/CN2021/100841
(87) International publication number: WO 2021/259157

(57) **Abstract**

This application discloses a relay determining method and apparatus, a relay configuration method and apparatus, a terminal, and a network side device. The method includes: receiving relay configuration information, the relay configuration information including a configuration parameter for at least one relay operation; and determining, based on the relay configuration information, a relay operation to be used.

## Description

### CROSS-REFERENCE TO RELATED APPLICATIONS

This application claims priority to Chinese Patent Application No. 202010576287.8, filed in China on June 22, 2020, which is incorporated herein by reference in its entirety.

### TECHNICAL FIELD

This application belongs to the field of wireless communication technologies, and specifically, relates to a relay determining method and apparatus, a relay configuration method and apparatus, a terminal, and a network side device.

### BACKGROUND

Sidelink (sidelink, or translated as secondary link, side link, or bylink) is supported from a long term evolution (Long Term Evolution, LTE) system, allowing terminal user equipments (User Equipment, UE) to directly transmit data without through network devices.

The design of LTE sidelink is suitable for specific public safety affairs (such as emergency communication in disaster sites such as fire sites or earthquake sites) or vehicle to everything (vehicle to everything, V2X) communication. Vehicle to everything communication includes various services, such as basic safety communication, advanced (autonomous) driving, formation, sensor expansion. LTE sidelink supports only broadcast communication, mainly used for basic safety communication. Other advanced V2X services with strict quality of service (Quality of Service, QoS) requirements in terms of delay and reliability are supported by new radio (New Radio, NR) sidelink.

A 5th generation (5th Generation, 5G) NR system can be used in an operating band above 6 GHz that is not supported by LTE, and supports a larger operating bandwidth. However, the NR system of a current release only supports an interface between a base station and a terminal, and does not support a sidelink interface for direct communication between terminals.

A sidelink interface may also be referred to as a PC5 interface.

Currently, sidelink transmission mainly includes the following transmission modes: broadcast (broadcast), groupcast (groupcast), and unicast (unicast). Unicast, as the name implies, is one-to-one transmission. Groupcast is one-to-many transmission. Broadcast is also one-to-many transmission, but broadcast does not indicate that terminals belong to a same group.

Currently, sidelink unicast and groupcast communications support a hybrid automatic repeat request (Hybrid Automatic Repeat reQuest, HARQ) feedback mechanism at the physical layer.

There are two resource allocation modes for sidelink terminals:
(1) A network side device (base station) controls and allocates a resource for each terminal.
(2) Each terminal autonomously selects a resource.

In a typical relay scenario, a relay terminal (relay UE) forwards, to a target terminal, data transmitted by a remote terminal (remote UE) over a sidelink between the remote terminal and the relay terminal. In this scenario, data is transmitted between a remote terminal 1 and a remote terminal 2, and the relay terminal serves as a data relay.

During implementation of this application, the inventors have found that the existing technology has at least the following disadvantage:

Although an existing mechanism supports an L2 relay architecture or an L3 relay architecture, there is no specific solution for how a terminal determines which relay architecture to use for data transmission in an actual application scenario.

### SUMMARY

Embodiments of this application are intended to provide a relay determining method and apparatus, a relay configuration method and apparatus, a terminal, and a network side device, to resolve a problem of how to determine which relay architecture to use.

To resolve the foregoing technical problem, this application is implemented as follows:

According to a first aspect, an embodiment of this application provides a relay determining method, applied to a remote terminal and including:
receiving relay configuration information, the relay configuration information including a configuration parameter for at least one relay operation; and
determining, based on the relay configuration information, a relay operation to be used.

According to a second aspect, an embodiment of this application provides a relay configuration method, applied to a network side device and including:
sending relay configuration information, the relay configuration information including a configuration parameter for at least one relay operation.

According to a third aspect, an embodiment of this application provides a relay determining apparatus, applied to a remote terminal and including:
a first receiving module, configured to receive relay configuration information, the relay configuration information including a configuration parameter for at least one relay operation; and
a relay determining module, configured to determine, based on the relay configuration information, a relay operation to be used.

According to a fourth aspect, an embodiment of this application provides a relay configuration apparatus, applied to a network side device and including:
a sending module configured to send relay configuration information, the relay configuration information including a configuration parameter for at least one relay operation.

According to a fifth aspect, a terminal is provided, where the terminal includes a processor, a memory, and a program or instructions stored in the memory and executable on the processor, and when the program or instructions are executed by the processor, the steps of the method according to the first aspect are implemented.

According to a sixth aspect, a network side device is provided, where the network side device includes a processor, a memory, and a program or instructions stored in the memory and executable on the processor, and when the program or instructions are executed by the processor, the steps of the method according to the second aspect are implemented.

According to a seventh aspect, a readable storage medium is provided, where the readable storage medium stores a program or instructions, and when the program or instructions are executed by a processor, the steps of the method according to the first aspect or the steps of the method according to the second aspect are implemented.

According to an eighth aspect, a chip is provided, where the chip includes a processor and a communication interface, the communication interface is coupled to the processor, and the processor is configured to run a program or instructions of a network side device to implement the method according to the first aspect or implement the method according to the second aspect.

According to a ninth aspect, a computer software product is provided, where the computer software product is stored in a non-volatile storage medium, and the software product is configured to be executed by at least one processor to implement the steps of the method according to the first aspect or the steps of the method according to the second aspect.

According to a tenth aspect, a communication device is provided, where the communication device is configured to perform the method according to the first aspect or the method according to the second aspect.

In the embodiments of this application, in a case that at least one relay operation is present, the terminal selects, based on the relay configuration information sent by the network side device, a corresponding relay operation for transmission. In this way, features of different relay operations are fully utilized, which ensures quality of service QoS of service of the remote terminal and also optimizes transmission efficiency, thereby improving user experience and guaranteeing system efficiency.

### BRIEF DESCRIPTION OF DRAWINGS

FIG. 1 is a block diagram of a wireless communications system to which the embodiments of this application are applicable;
FIG. 2 is a flowchart of steps of a relay determining method according to an embodiment of this application;
FIG. 3 is a flowchart of steps of a relay configuration method according to an embodiment of this application;
FIG. 4 is a schematic structural diagram of a relay determining apparatus according to an embodiment of this application;
FIG. 5 is a schematic structural diagram of a relay configuration apparatus according to an embodiment of this application;
FIG. 6 is a schematic structural diagram of a communication device according to an embodiment of the application;
FIG. 7 is a schematic structural diagram of a terminal according to an embodiment of the application; and
FIG. 8 is a schematic structural diagram of a network side device according to an embodiment of the application.

### DETAILED DESCRIPTION OF EMBODIMENTS

The following clearly and completely describes the technical solutions in the embodiments of this application with reference to the accompanying drawings in the embodiments of this application. Apparently, the described embodiments are some but not all of the embodiments of this application. All other embodiments obtained by a person of ordinary skill in the art based on the embodiments of this application without creative efforts shall fall within the protection scope of this application.

In the specification and claims of this application, the terms such as "first" and "second" are intended to distinguish between similar objects but do not necessarily indicate a specific order or sequence. It should be understood that data used in such a way are interchangeable in proper circumstances so that the embodiments in this application can be implemented in other orders than the order illustrated or described herein. Moreover, objects modified by "first", "second", and the like generally belong to a same type and are not limited to a specific quantity, for example, first object may be provided in the quantity of one or in plurality. In addition, in the specification and claims, "and/or" represents presence of at least one of connected objects, and the symbol "/" in this specification usually indicates an "or" relationship between associated objects.

It should be noted that technologies described in the embodiments of this application are not limited to a long term evolution (Long Term Evolution, LTE) or LTE-Advanced (LTE-Advanced, LTE-A) system, and may also be applied to various wireless communications systems, for example, code division multiple access (Code Division Multiple Access, CDMA), time division multiple access (Time Division Multiple Access, TDMA), frequency division multiple access (Frequency Division Multiple Access, FDMA), orthogonal frequency division multiple access (Orthogonal Frequency Division Multiple Access, OFDMA), single-carrier frequency-division multiple access (Single-carrier Frequency-Division Multiple Access, SC-FDMA), and other systems. The terms "system" and "network" in the embodiments of this application are usually used interchangeably. Techniques described may be used in the aforementioned systems and radio technologies, and can also be used in other systems and radio technologies. However, in the following descriptions, a new radio (New Radio, NR) system is described for an illustration purpose, and NR terms are used in most of the following descriptions, although these technologies may also be applied to other applications than an NR system application, for example, the sixth (6th Generation, 6G) communications system.

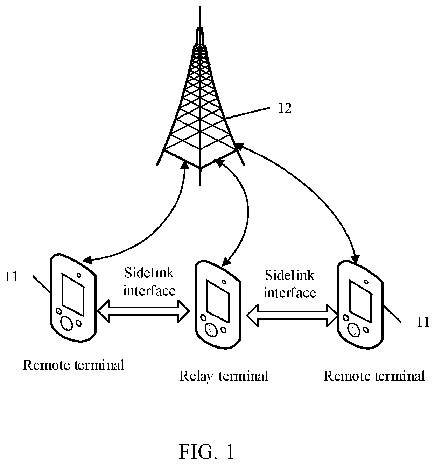

FIG. 1 is a block diagram of a wireless communications system to which the embodiments of this application are applicable. The wireless communications system includes a terminal 11 and a network side device 12. The terminal 11 may also be referred to as a terminal device or user equipment (User Equipment, UE). The terminal 11 may be a mobile phone, a tablet personal computer (Tablet Personal Computer), a laptop computer (Laptop Computer), or notebook computer, a personal digital assistant (Personal Digital Assistant, PDA), a palmtop computer, a netbook, an ultra-mobile personal computer (Ultra-mobile personal computer, UMPC), a mobile internet device (Mobile Internet Device, MID), a wearable device (Wearable Device), or a terminal side device such as a vehicle user equipment (Vehicle User Equipment, VUE) or pedestrian user equipment (Pedestrian User Equipment, PUE). The wearable devices include a smart band, a headphone, glasses, and the like. It should be noted that a specific type of the terminal 11 is not limited in the embodiments of this application. The network side device 12 may be a base station or a core network, where the base station may be referred to as a NodeB, an evolved NodeB, an access point, a base transceiver station (Base Transceiver Station, BTS), a radio base station, a radio transceiver, basic service set (Basic Service Set, BSS), an extended service set (Extended Service Set, ESS), a Node B, an evolved Node B (eNB), a home NodeB, a home evolved NodeB, a wireless local area network (Wireless Local Area Network, WLAN) access point, a wireless fidelity (Wireless Fidelity, Wi-Fi) node, a transmission and reception point (Transmitting and Receiving Point, TRP), or another appropriate term in the art. Provided that the same technical effects are achieved, the base station is not limited to a specific technical term. It should be noted that in the embodiments of this application, a base station in the NR system is merely used as an example, but a specific type of the base station is not limited.

With reference to the accompanying drawings, the following describes in detail a relay determining method and apparatus, a relay configuration method and apparatus, a terminal, and a network side device provided in the embodiments of this application with specific embodiments and application scenarios.

A relay operation in the embodiments of this application includes:
an L2 relay operation and/or an L3 relay operation.

In a typical L2 relay operation scenario, a relay terminal forwards, to a base station, L2 data transmitted by a remote terminal over a sidelink between the remote terminal and the relay terminal. In this scenario, communication between a first remote terminal and the relay terminal only relates to some L2 and below protocol stacks, for example, only relates to RLC, MAC, and PHY layers, and data relayed by the relay terminal is of L2 data packet type, for example, an RLC service data unit (service Data Unit, SDU) or a backhaul adaptation protocol (Backhaul Adaptation Protocol, BAP) SDU. The relay terminal does not perform a security-related operation on data of the remote terminal, and data security is guaranteed by the end-to-end PDCP protocol layer between the base station and the remote terminal, which is transparent to the relay terminal. The L2 relay operation enables the data of the remote terminal to obtain end-to-end (between the remote terminal and the base station) security, which is transparent to the relay terminal, and can guarantee better service continuity during switching of the remote terminal, so that a service is better transmitted.

In a typical L3 relay operation scenario, the relay terminal forwards, to the base station, L3 data transmitted by the remote terminal over the sidelink between the remote terminal and the relay terminal. In this scenario, communication between the first remote terminal and the relay terminal relates to a complete protocol stack including, for example, the service data adaptation protocol (Service Data Adaptation Protocol, SDAP), the packet data convergence protocol (Packet Data Convergence Protocol, PDCP), the radio resource control (Radio Resource Control, RRC) layer, the radio link control (Radio Link Control, RLC) layer, the media access control (Media Access Control, MAC) layer, and the physical layer (Physical layer, PHY). Data relayed by the relay terminal is of L3 data packet type, for example, an IP data packet. The L3 relay operation features simple implementation and clear process.

The L3 relay operation includes:
an L3 relay protocol stack, where a user-plane session of the remote terminal is established by the network side device and a core network node of the relay terminal;
   and/or
an L3 relay protocol stack, where a user-plane session of the remote terminal is established by the network side device and a core network node of the remote terminal.

In the relay determining method provided by the embodiments of this application, the network side device supports at least one relay operation. In a case that the network side device supports both L2 and L3 relay operations, the remote terminal uses different relay operations in different deployment scenarios, selects different relay operations based on service requirements, or selects different relay operations based on capabilities of the relay terminal, to maximize advantages of the L2 and L3 relay operations while reducing impact of their disadvantages, thereby improving system efficiency and service assurance.

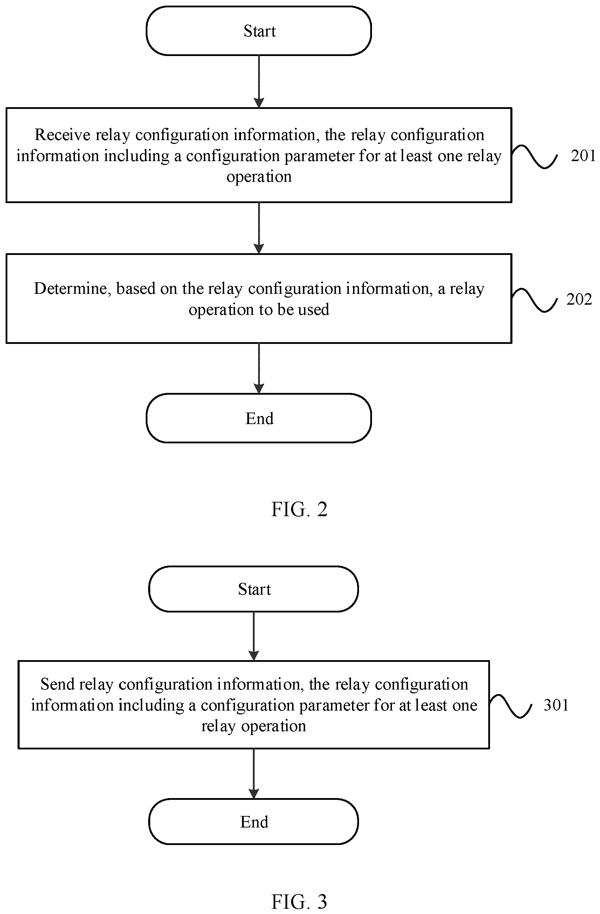

As shown in FIG. 2, an embodiment of this application provides a relay determining method, applied to a remote terminal and including the following steps:
Step 201: Receive relay configuration information, the relay configuration information including a configuration parameter for at least one relay operation.
Step 202: Determine, based on the relay configuration information, a relay operation to be used.

In this embodiment of this application, the relay configuration information sent by a network side device to the terminal needs to include at least configuration parameters for one or more relay operations, to enable the terminal to select an appropriate relay operation based on the configuration parameters for relay data transmission.

For example, if the relay configuration information includes a configuration parameter for one relay operation, the remote terminal determines, based on the configuration parameter for the relay operation, whether to use the relay operation. For another example, if the relay configuration information includes configuration parameters for two or more relay operations, the remote terminal determines, based on the configuration parameters, whether to use a relay operation, and then selects, based on the configuration parameters, a relay operation to be used.

Due to different service requirements in a network deployment area, different functions supported by the network side device, or other factors, an operator needs to enable network side devices to support different features. For example, in some areas requiring only a public security service that features high data repetition or low continuity requirement, digital signature or the like can be used to resolve a security problem, without requiring a relay terminal to provide a complex data forwarding service. In this case, base stations in such areas may be designed to support only an L3 relay operation function. For example, in some other areas with only relay operation scenarios for commercial application, services have specific requirements for continuity and security, and therefore relay terminals are required to provide comprehensive data forwarding services. In this case, base stations in such areas may be designed to support only an L2 relay operation function. Correspondingly, in some other areas requiring both types of application described above, base stations in such areas may be designed to support both the L3 relay operation function and the L2 relay operation function. In the foregoing, requirements for different architectural deployments are determined based on application scenarios. After the requirements are determined, hardware and software versions of the network side device further need to be upgraded or updated to support corresponding L2 and/or L3 relay operations. The network side device may also determine, based on its own hardware and software versions, which relay operation or both relay operations to support. In addition, the network side device needs to inform the terminal of a relay operation type supported by the network side device. Specifically, in an optional embodiment, the method further includes:
determining, based on the configuration parameter for the relay operation, that the network side device supports a relay operation type corresponding to the configuration parameter.

In other words, the network side device indirectly or implicitly indicates, by using the configuration parameter for the relay operation, the relay operation type supported by the network side device. For example,
the network side device has sent a configuration parameter for the L2 relay operation, indirectly indicating that the network side device supports the L2 relay operation;
the network side device has sent a configuration parameter for the L3 relay operation, indirectly indicating that the network side device supports the L3 relay operation; or
the network side device has sent configuration parameters for the L2 relay operation and the L3 relay operation, indirectly indicating that the network side device supports both the L2 relay operation and the L3 relay operation.

Specially, if the network side device does not send any configuration parameter related to a relay operation, it indirectly indicates that the network side device does not support any relay operation.

Alternatively, in another optional embodiment, the relay configuration information further includes a first indication field for indicating the relay operation type supported by the network side device.

In other words, the network side device directly indicates, by using the first indication field in the relay configuration information, the relay operation type supported by the network side device.

For example, the network side device may indicate its supported relay operation type in the following manner: The first indication field includes three options: L3 relay operation, L2 relay operation, and both (that is, both L3 relay operation and L2 relay operation being supported); or the first indication field includes four options: L3 relay operation, L2 relay operation, both (that is, both L3 relay operation and L2 relay operation being supported), and none (no relay operation being supported). In the case of three options, the network side device indicates, by maintaining the field unspecified or not displayed, that the network side device does not support any relay operation function. In the case of four options, the base station may indicate, by specifying the value of the first indication field as none, that the base station does not support any relay operation function.

Optionally, the foregoing relay configuration information may be sent to the terminal through a system message or dedicated signaling, and supporting of the relay operation type generally includes the following cases:

The network side device does not support any relay operation, which may be indicated by the network side device in an explicit or implicit way. The explicit way means that the network side device indicates, by using an explicit information field, that the network side device does not support any relay operation. The implicit way means that once the network side device carries no configuration indication for a relay operation, for example, no indication of support, the network side device does not support any relay operation by default. In such a case that the base station does not support any relay operation, the terminal is not allowed to initiate a relay request and any relay operation if the terminal learns that the network side device does not support any relay operation.

The network side device supports only one type of relay operation, for example, the L2 relay operation or the L3 relay operation.

When the network side device supports only one type of relay operation, a standard-default manner or a standard-specified manner may be used to specify that when the network side device indicates that it supports one relay operation type, the network side device may indicate, by using the explicit information field, the supported relay operation type. The terminal initiates the corresponding relay operation of L2 relay (or L3 relay) type based on the relay operation type supported by the base station. When receiving the relay configuration information from the network side device, the terminal initiates the corresponding relay operation based on the relay operation type supported by the network side device.

When the network side device support two types of relay operations, namely, the L2 relay operation and the L3 relay operation, the network side device may indicate, by using the explicit information field, the two supported types of relay operations. When receiving the relay configuration information from the network side device, the terminal may initiate the corresponding relay operation based on the relay operation type supported by the network side device.

The relay configuration information needs to directly or indirectly indicate the relay operation type supported by the network side device. Further, the relay configuration information needs to include a configuration parameter for the relay operation (if only one type of relay operation is supported, only a configuration parameter for such type of relay operation needs to be included; if both types of relay operations are supported, configuration parameters for both operation operations need to be included).

In an optional embodiment, the configuration parameter for the relay operation includes at least one of the following:
(1) First condition information under which the remote terminal is allowed to use the relay operation: for example, a condition for the L2 relay operation, such as a reference signal received power (Reference Signal Received Power, RSRP) threshold condition of the remote terminal or an RSRP threshold condition of the relay terminal; or a condition for the L3 relay operation, such as an RSRP threshold condition of the remote terminal or an RSRP threshold condition of the relay terminal. The conditions for the L2 relay operation and the L3 relay operation may be configured separately, and may have different threshold values or conditions, or may be consistent, that is, the same threshold parameters or conditions are used for the L2 relay operation and the L3 relay operation.
(2) Bearer configuration information with which the remote terminal performs the relay operation: for example, bearer configuration information with which the terminal performs L2 relay, such as a configuration of RLC bearer; or bearer configuration information with which the terminal performs L3 relay, such as configurations corresponding to sidelink radio bearer (Sidelink Radio Bearer, SLRB) and RLC bearer. The bearer configurations for L2 and L3 may be independent of each other, with different configuration fields; or may be consistent for the same part, that is, the same configuration of RLC bearer is used for the L2 relay operation and the L3 relay operation.
(3) Second condition information for selecting the relay operation when the remote terminal selects a relay operation for data transmission.

The second condition information includes at least one of the following:
Service information. For example, in a case that a service requirement of the terminal or a link meets a specified condition, an L2 architecture is selected; in a case that the service requirement of the terminal or the link meets other conditions, an L3 architecture is selected. For another example, in a case that a service of the terminal is public security, the terminal selects the L3 architecture; in a case that the service of the terminal is another service, the terminal selects the L2 architecture.
Link information. The link information includes at least one of the following: link condition information of a Uu interface of the relay terminal; link condition information of a Uu interface of the remote terminal; or link condition information of a PC5 interface between the remote terminal and the relay terminal.
Association information of the remote terminal and the relay terminal. For example, when the remote terminal and the relay terminal have a binding relationship (or an association relationship) like a mobile phone and a wearable device of a same user, or two terminals moving together on a same vehicle, the L3 architecture may be preferentially considered, and the L2 architecture may be used for other cases. For another example, if the remote terminal and the relay terminal belong to a same PLMN, or have a same communication restriction, for example, two terminals belonging to a same closed subscriber group (Closed Subscriber Group, CSG) are allowed to access one CSG cell at the same time, the L2 architecture is allowed to be selected (in this case, the remote terminal and the relay terminal are connected to a same base station at the same time). When a collaborative or negotiated charging policy is used between the remote terminal and the relay terminal, the L3 relay operation may be selected. This is because in the case of the L3 relay operation, network usage costs of the remote terminal may need to be negotiated and shared with the relay terminal.
Relay operation selection policy.

The service information includes at least one of the following:
quality of service QoS requirement for a service;
latency information of the service;
block error rate of the service;
duration of the service;
security requirement for the service; or
continuity requirement for the service.

For example, if QoS of the service of the terminal meets a specific requirement, for example, a priority meets a specific threshold, a block error rate meets a specific threshold, or the service is IP/non-IP data for a specific 5G QoS identifier (5G QoS Identifier, 5QI), the L2/L3 relay operation is performed. Otherwise, another type of relay operation is performed.

In an optional embodiment, when the relay configuration information includes configuration parameters for two or more relay operations (that is, the network side device supports two or more relay operations), step 202 includes:
selecting, based on the relay configuration information and a target parameter, one relay operation from the two or more relay operations as the relay operation to be used.

The target parameter includes at least one of the following:
service information of the remote terminal;
capability information of the relay terminal; or
association information of the remote terminal and the relay terminal.

When the network side device can support two or more relay operations, the network side device provides the configuration parameters for two or more relay operations and selects, based on the service information of the remote terminal, the relay operation to be used.

For example, when the terminal needs to perform service transmission, it may be first determined whether the first condition information for the relay operation is met. For example, if an RSRP between the terminal and a service cell is lower than a specific threshold, it indicates that the terminal is at the edge of the cell and may complete service transmission through relay transmission by another user. If the L2 architecture and the L3 architecture have different condition constraints, when the terminal only meets a condition of one of the architectures, only a relay operation meeting the condition can be initiated for transmission. When both conditions are met, a relay operation may be selected based on the service information, where the conditions may be configured by the network side, or pre-specified, or obtained by an algorithm of the terminal.

Example 1: When initiating a specific service, the terminal may select a corresponding relay operation, for example, select the L3 relay operation for a public security service, and select the L2 relay operation for a general enhanced mobile broadband (enhanced Mobile Broadband, eMBB) service.

Example 2: When initiating a service with a specific identifier, for example, a service ID or QoS ID that is in a list supported by a specific relay operation, the terminal selects the corresponding relay operation.

Example 3: When initiating a service with specific characteristics, the terminal may perform, for example, the L3 relay operation for an IP packet, or the L2 relay operation for a non-IP (non-IP) packet.

Example 4: When initiating a service with a high requirement for block error rate, for example, below 10⁻⁶, the terminal in this case may select the L2 relay operation to avoid a packet loss caused by handover.

Example 5: When initiating a service with a high QoS requirement, for example, a high priority or service continuity, the terminal in this case may select the L2 relay operation to avoid a packet loss caused by handover.

Example 6: When initiating a service with short duration, for example, a link is removed immediately after a small quantity of data packets are sent, the terminal in this case may select the L3 relay operation.

Example 7: When the terminal initiating a service has a binding\belonging\cooperation\access restriction\cost sharing relationship with the relay terminal, like a cell phone and a wearable device of a same user, or the remote terminal and the relay terminal moving together on a same vehicle, the terminal in this case may select the L3 relay operation.

For the remote terminal, capability requirements of the remote terminal for the L2 relay operation and the L3 relay operation are similar without significant differences. Therefore, the remote terminal can generally support both types of relay operations in terms of capability. However, due to the version, for example, the first version supports only the L3 relay operation, and only the later enhanced version can support the L2 relay operation, then the remote terminal of the first version can only select the L3 relay operation, while the remote terminal of the later version can select one of the two relay operations as needed. However, functions of the relay terminal under the L2 relay operation and the L3 relay operation are quite different. Therefore, the capability information of the relay terminal may be considered during selection of the relay operation.

It should be noted that in the L2 relay operation, the relay terminal forwards an RLC SDU (RLC service data unit)/a BAP SDU (BAP service data unit), but does not need to perform operations such as PDCP security and header compression. However, in the L2 relay operation, two links involving the relay terminal have an RLC bearer, and configuration and mapping of the RLC bearer are generally controlled and indicated by the network side device. According to an example of an existing L2 architecture with integrated access backhaul (Integrated Access Backhaul, IAB), a relay node in the middle needs to have an Fl interface function to complete data relay.

In the L3 relay operation, the relay terminal forwards an IP packet, or an SDAP SDU (SDAP service data unit), and needs to perform operations such as PDCP security and header compression. In addition, in the L3 relay operation, the two links involving the relay terminal function as the Uu interface between the relay terminal and the network side device and the PC5 interface between the relay terminal and the remote terminal, respectively. The existing protocol stack and process may be used, and mapping of RBs at both ends may be configured by the network, so that a data relay service can be completed by respective processing of the two links without the support of the F1 interface function.

The capability information of the relay terminal includes:
supporting none of the relay functions;
supporting the L2 relay operation function, in which case the relay terminal can be used as a relay terminal in the L2 relay operation;
supporting the L3 relay operation function, in which case the relay terminal can be used as a relay terminal in the L3 relay operation; and
supporting both the L2 relay operation function and the L3 relay operation function, in which case the relay terminal can be used as both a relay terminal in the L2 relay operation and a relay terminal in the L3 relay operation.

In conclusion, after the remote terminal selects, based on service information of the remote terminal or a communication scenario, a relay operation to be used, and has a requirement of the remote terminal acknowledged by the relay terminal during interaction with the relay terminal, corresponding establishment and transmission procedures can be performed based on the selected relay operation.

For example, when needing to perform relay service transmission, a remote terminal may first determine, based on a version, service information, or the like of the remote terminal, which type of relay operation needs to be initiated. Subsequently, the remote terminal may select a corresponding relay terminal with such relay capability during interaction with the relay terminal.

In an optional embodiment, the method further includes:
broadcasting the relay operation to be used; and
receiving a response message from a terminal that supports the relay operation, and determining the terminal that sends the response message as a relay terminal.

For example, the remote terminal broadcasts the relay operation, carrying information such as a relay service request and a relay operation type (L2/L3 or both), to the outside through the PC5 interface. The relay terminal receives the broadcast and determines, based on its own capability, whether the relay terminal can support the service request for the relay operation type. If yes, the relay terminal sends a response message to the remote terminal; and if not, the relay terminal ignores the request message.

Alternatively, in another optional embodiment, the method further includes:
receiving second indication information broadcast by another terminal, where the second indication information is used to indicate a relay operation type supported by the another terminal; and
selecting, based on the second indication information, a terminal that supports the relay operation to be used as a relay terminal.

For example, the relay terminal broadcasts the indication information, carrying information such as a relay service type supported by the relay terminal and a relay operation type (L2 or L3 or both), to the outside through the PC5 interface. The remote terminal receives the broadcast and determines, based on its own service requirement, whether the relay terminal is needed. If the conditions are met, the remote terminal sends a response message to the relay terminal; if the conditions are not met, the remote terminal ignores the broadcast message.

In normal cases, if more than one relay terminal meets the relay operation type and service requirement, the remote terminal selects a relay terminal with the best link quality. When no relay terminal that meets the relay operation type and service requirement is found within a range that meets a basic PC5 communication requirement, the remote terminal may decide by itself whether to expand the range. For example, when the remote terminal needs to perform the L2 relay operation but no terminal with an L2 relay function is found within the nearest range that meets the communication requirement, the remote terminal may decide by itself whether to select one L3 relay that meets the communication requirement within the range for service.

In an optional embodiment, after the relay terminal and the remote terminal have negotiated the relay operation type, in a "terminal-to-network" relay scenario, a relay-related operation is performed under the control of the network, that is, an execution result of the remote terminal needs to be notified to the network so that the network can deliver a reasonable configuration for the subsequent relay operation. To be specific, the method further includes:
sending a first message to the network side device, or sending, by the relay terminal, a second message to the network side device, where the first message or the second message carries request information for the relay operation to be used;
receiving a reconfiguration message sent by the network side device or the relay terminal; and
establishing a bearer corresponding to the requested relay operation based on the reconfiguration message.

In the case of the L2 relay operation, because an RRC procedure can be performed directly between the remote terminal and the network side device, the remote terminal may inform, through the RRC procedure, the base station that the remote terminal needs to establish transmission for the L2 relay operation, so that the network side device subsequently establishes a corresponding transmission pipeline, allocates a resource, and the like for the remote terminal based on the requirement. In the case of the L3 relay operation, there is no direct RRC connection between the remote terminal and the network side device, so that the relay terminal needs to initiate a relay request to the network side device on behalf of the remote terminal. Similarly, the relay terminal also has an L3 relay requirement carried in the request, so that the network side device establishes a corresponding transmission pipeline, allocates a resource, and the like for the remote terminal based on the requirement.

Specifically, for the L2 relay operation, because there is an RRC connection between the remote terminal and the network, the remote terminal sends, through RRC signaling of the remote terminal (the signaling is relayed through the relay terminal), a request for the relay operation selected by the remote terminal to the network. Then, the network side device delivers a corresponding reconfiguration message (which, for the remote terminal, mainly includes an SLRB configuration and an RLC bearer configuration between the remote terminal and the relay terminal), so that a bearer configuration corresponding to the selected relay operation is established based on the reconfiguration message. At the same time, the relay terminal also has to take actions in this procedure. To be specific, the relay terminal sends the request for the relay operation to the network through RRC signaling of the relay terminal, receives the corresponding reconfiguration message (which, for the relay terminal, includes the RLC bearer configuration between the remote terminal and the relay terminal and an RLC bearer configuration between the relay terminal and the network) delivered by the network, and establishes an RLC bearer with the remote terminal and an RLC bearer with the network based on the configurations.

Specifically, for the L3 relay operation, because there is not necessarily an RRC connection between the remote terminal and the network, the relay terminal sends a relay operation request to the network, and the network delivers a corresponding reconfiguration message (mainly including an L3+L2 protocol stack configuration of a Uu bearer of the relay terminal and an L3+L2 protocol stack configuration of a bearer between the relay terminal and the remote terminal).

It should be noted that in the foregoing process, L2 and L3 relay operations can be distinguished without using an explicit field. This is because L2 and L3 relay operations have significant differences in architectures and signaling processes, where in the L2 relay operation, the remote terminal autonomously establishes RRC to communicate with the network, and in the L3 relay operation, only the relay terminal has an RRC connection. Therefore, through different signaling processes, the network can know a specific architecture for the currently requested relay, for example, an L2 relay configuration requested by the RRC signaling of the remote terminal (the signaling of the remote terminal is relayed to the network through the relay terminal), or an L3 relay configuration requested by the RRC signaling of the relay terminal (the relay terminal has its own signaling radio bearer SRB for signaling transmission).

Further, after the bearer has been successfully established, the method further includes:
performing, based on the established bearer, related transmission corresponding to the relay operation. Based on the configured bearer, the relay terminal completes different forwarding actions in different relay operations, for example, forwarding an L2 PDU in the L2 relay operation, and forwarding a non-IP L3 packet equivalent to an IP packet in the L3 relay operation.

In addition, there are two alternatives for the L3 relay operation: one is that the relay terminal establishes its own core network bearer for data transmission of the remote terminal, and the other is that the relay terminal establishes the core network bearer for the remote terminal to perform data transmission. In both cases, information for distinguishing may be carried in the foregoing request, for example, a type indication or other information for distinguishing, so as to facilitate subsequent different operations. Based on different indications received, the network sends different types of information and even selects different core network nodes (including a core network node corresponding to the relay terminal and a core network node corresponding to the remote terminal) for establishment of the core network bearer. Similarly, there still be differences between the foregoing two manners in the transmission procedure following the bearer establishment, such as different processing of IP address. Details are not described herein.

In still another optional embodiment, after the relay terminal and the remote terminal have negotiated the relay operation type, in a "terminal-to-terminal" relay scenario, the configuration parameter comes from the network and the bearer configuration procedure is performed between a remote terminal 1 and a remote terminal 2 (namely, another remote terminal).

It should be noted that in the "terminal-to-terminal" relay scenario, the remote terminal 1 may be referred to as a source terminal and the remote terminal 2 may be referred to as a target terminal. In other words, in the "terminal-to-terminal" relay scenario, the "remote terminal" mentioned in the embodiments of this application may be replaced by "source terminal", which is not specifically limited herein.

First, during a discovery procedure, the initiating remote terminal 1 and the relay terminal, as well as the relay terminal and the remote terminal 2, need to confirm to use the same relay operation. After the relay operation to be used is confirmed through negotiation, the method further includes at least one of the following steps:
sending a third PC5 RRC message to the relay terminal during establishment of a radio resource control RRC connection to the relay terminal, where the third PC5 RRC message explicitly or implicitly indicates the relay operation to be used, and the third PC5 RRC message further carries bearer configuration information of the relay operation;
sending, by the relay terminal, a fourth PC5 RRC message to another remote terminal during establishment of an RRC connection between the relay terminal and the another remote terminal, where the fourth PC5 RRC message explicitly or implicitly indicates the relay operation to be used, and the fourth PC5 RRC message further carries bearer configuration information of the relay operation; or
sending a fifth PC5 RRC message to another remote terminal during establishment of an RRC connection to the another remote terminal, where the fifth PC5 RRC message explicitly or implicitly indicates the relay operation to be used, and the fifth PC5 RRC message further carries bearer configuration information of the relay operation.

For example, for the L2 relay operation:
An RRC procedure is performed between the remote terminal 1 and the remote terminal 2. Therefore, in this RRC procedure, an identifier of the relay operation and a bearer configuration associated with the relay operation, for example, the SLRB configuration, need to be explicitly or implicitly carried.

In an RRC procedure between the remote terminal 1 and the relay terminal, an identifier of the relay operation and a bearer configuration associated with that relay operation, for example, the RLC bearer configuration (used by both the relay terminal and the remote terminal 1), also need to be explicitly or implicitly carried.

In an RRC procedure between the remote terminal 2 and the relay terminal, an identifier of the relay operation and a configuration associated with the relay operation, for example, the RLC bearer configuration (used by both the relay terminal and the remote terminal 2), also need to be explicitly or implicitly carried.

For another example, for the L3 relay operation:
There is no direct RRC procedure between the remote terminal 1 and the remote terminal 2.

In an RRC procedure between the remote terminal 1 and the relay terminal, an identifier of the relay operation and a configuration associated with the relay operation, for example, an SLRB+RLC bearer configuration (used by both the relay terminal and the remote terminal 1), also need to be explicitly or implicitly carried.

In an RRC procedure between the remote terminal 2 and the relay terminal, an identifier of the relay operation and a configuration associated with the relay operation, for example, an SLRB+RLC bearer configuration (used by both the relay terminal and the remote terminal 2), also need to be explicitly or implicitly carried.

In conclusion, in this embodiment of this application, in a case that at least one relay operation is present, the terminal selects, based on the relay configuration information sent by the network side device, a corresponding relay operation for transmission. In this way, features of different relay operations are fully utilized, which ensures quality of service QoS of service of the remote terminal and also optimizes transmission efficiency, thereby improving user experience and guaranteeing system efficiency. In a case that at least two relay operations are present, the network side indicates the relay operation type supported by the network side. Then, an appropriate relay operation is selected based on the service information or the capability of the relay terminal, to carry data of the remote terminal. This can fully exert advantages of various relay operations and avoid disadvantages, thus making a system more flexible and improving system performance and user experience.

As shown in FIG. 3, an embodiment of this application further provides a relay configuration method, applied to a network side device and including the following steps.

Step 301: Send relay configuration information, the relay configuration information including a configuration parameter for at least one relay operation.

In this embodiment of this application, the relay configuration information sent by the network side device to a terminal needs to include at least configuration parameters for one or more relay operations, to enable the terminal to select an appropriate relay operation based on the configuration parameters for relay data transmission.

For example, if the relay configuration information includes a configuration parameter for one relay operation, a remote terminal determines, based on the configuration parameter for the relay operation, whether to use the relay operation. For another example, if the relay configuration information includes configuration parameters for two or more relay operations, the remote terminal determines, based on the configuration parameters, whether to use a relay operation, and then selects, based on the configuration parameters, a relay operation to be used.

Due to different service requirements in a network deployment area, different functions supported by the network side device, or other factors, an operator needs to enable network side devices to support different features. For example, in some areas requiring only a public security service that features high data repetition or low continuity requirement, digital signature or the like can be used to resolve a security problem, without requiring a relay terminal to provide a complex data forwarding service. In this case, base stations in such areas may be designed to support only an L3 relay operation function. For example, in some other areas with only relay operation scenarios for commercial application, services have specific requirements for continuity and security, and therefore relay terminals are required to provide comprehensive data forwarding services. In this case, base stations in such areas may be designed to support only an L2 relay operation function. Correspondingly, in some other areas requiring both types of application described above, base stations in such areas may be designed to support both the L3 relay operation function and the L2 relay operation function. In the foregoing, requirements for different architectural deployments are determined based on application scenarios. After the requirements are determined, hardware and software versions of the network side device further need to be upgraded or updated to support corresponding L2 and/or L2 relay operations. The network side device may also determine, based on its own hardware and software versions, which relay operation or both relay operations to support. In addition, the network side device needs to inform the terminal of a relay operation type supported by the network side device. Specifically, in an optional embodiment, the method further includes:
indicating, by using the configuration parameter for the relay operation, that the network side device supports a relay operation type corresponding to the configuration parameter. In other words, the network side device indirectly or implicitly indicates, by using the configuration parameter for the relay operation, the relay operation type supported by the network side device. For example,
the network side device has sent a configuration parameter for the L2 relay operation, indirectly indicating that the network side device supports the L2 relay operation;
the network side device has sent a configuration parameter for the L3 relay operation, indirectly indicating that the network side device supports the L3 relay operation; or
the network side device has sent configuration parameters for the L2 relay operation and the L3 relay operation, indirectly indicating that the network side device supports both the L2 relay operation and the L3 relay operation.

Specially, if the network side device does not send any configuration parameter related to a relay operation, it indirectly indicates that the network side device does not support any relay operation.

Alternatively, in another optional embodiment, the relay configuration information further includes a first indication field for indicating the relay operation type supported by the network side device. In other words, the network side device directly indicates, by using the first indication field in the relay configuration information, the relay operation type supported by the network side device.

For example, the network side device may indicate its supported relay operation type in the following manner: The first indication field includes three options: L3 relay operation, L2 relay operation, and both (that is, both L3 relay operation and L2 relay operation being supported); or the first indication field includes four options: L3 relay operation, L2 relay operation, both (that is, both L3 relay operation and L2 relay operation being supported), and none (no relay operation being supported). In the case of three options, the network side device indicates, by maintaining the field unspecified or not displayed, that the network side device does not support any relay operation function. In the case of four options, the base station may indicate, by specifying the value of the first indication field as none, that the base station does not support any relay operation function.

Optionally, the foregoing relay configuration information may be sent to the terminal through a system message or dedicated signaling.

The relay configuration information needs to directly or indirectly indicate the relay operation type supported by the network side device. Further, the relay configuration information needs to include a configuration parameter for the relay operation (if only one type of relay operation is supported, only a configuration parameter for such type of relay operation needs to be included; if both types of relay operations are supported, configuration parameters for both operation operations need to be included).

In an optional embodiment, the configuration parameter for the relay operation includes at least one of the following:
(1) First condition information under which the remote terminal is allowed to use the relay operation: for example, a condition for the L2 relay operation, such as an RSRP threshold condition of the remote terminal or an RSRP threshold condition of the relay terminal; or a condition for the L3 relay operation, such as an RSRP threshold condition of the remote terminal or an RSRP threshold condition of the relay terminal. The conditions for the L2 relay operation and the L3 relay operation may be configured separately, and may have different threshold values or conditions, or may be consistent, that is, the same threshold parameters or conditions are used for the L2 relay operation and the L3 relay operation.
(2) Bearer configuration information with which the remote terminal performs the relay operation: for example, bearer configuration information with which the terminal performs L2 relay, such as a configuration of RLC bearer; or bearer configuration information with which the terminal performs L3 relay, such as configurations corresponding to SLRB (sidelink radio bearer) and RLC bearer. The bearer configurations for L2 and L3 may be independent of each other, with different configuration fields; or may be consistent for the same part, that is, the same configuration of RLC bearer is used for the L2 relay operation and the L3 relay operation.
(3) Second condition information for selecting the relay operation when the remote terminal selects a relay operation for data transmission.

The second condition information includes at least one of the following:
Service information. For example, in a case that a service requirement of the terminal or a link meets a specified condition, an L2 architecture is selected; in a case that the service requirement of the terminal or the link meets other conditions, an L3 architecture is selected. For another example, in a case that a service of the terminal is public security, the terminal selects the L3 architecture; in a case that the service of the terminal is another service, the terminal selects the L2 architecture.
Link information. The link information includes at least one of the following: link condition information of a Uu interface of the relay terminal; link condition information of a Uu interface of the remote terminal; or link condition information of a PC5 interface between the remote terminal and the relay terminal.
Association information of the remote terminal and the relay terminal. For example, when the remote terminal and the relay terminal have a binding relationship (or an association relationship) like a mobile phone and a wearable device of a same user, or two terminals moving together on a same vehicle, the L3 architecture may be preferentially considered, and the L2 architecture may be used for other cases. For another example, if the remote terminal and the relay terminal belong to a same PLMN, or have a same communication restriction, for example, two terminals belonging to a same CSG are allowed to access one CSG cell at the same time, the L2 architecture is allowed to be selected (in this case the remote terminal and the relay terminal are connected to a same base station at the same time). When a collaborative or negotiated charging policy is used between the remote terminal and the relay terminal, the L3 relay operation may be selected. This is because in the case of the L3 relay operation, network usage costs of the remote terminal may need to be negotiated and shared with the relay terminal.
Relay operation selection policy.

The service information includes at least one of the following:
quality of service QoS requirement for a service;
latency information of the service;
block error rate of the service;
duration of the service;
security requirement for the service; or
continuity requirement for the service.

For example, if QoS of the service of the terminal meets a specific requirement, for example, a priority meets a specific threshold, a block error rate meets a specific threshold, or the service is IP/non-IP data for a specific 5QI, the L2/L3 relay operation is performed. Otherwise, another type of relay operation is performed.

In an optional embodiment, after the relay terminal and the remote terminal have negotiated the relay operation type, in a "terminal-to-network" relay scenario, a relay-related operation is performed under the control of the network, that is, an execution result of the remote terminal needs to be notified to the network so that the network can deliver a reasonable configuration for the subsequent relay operation. To be specific, the method further includes:
receiving a first message sent by the remote terminal, or receiving a second message from the relay terminal selected by the remote terminal, where the first message or the second message carries request information for a relay operation to be used as determined by the remote terminal; and
sending a reconfiguration message to the remote terminal or the relay terminal, where the reconfiguration message is used to instruct the remote terminal to establish a bearer corresponding to the requested relay operation.

In the case of the L2 relay operation, because an RRC procedure can be performed directly between the remote terminal and the network side device, the remote terminal may inform, through the RRC procedure, the base station that the remote terminal needs to establish transmission for the L2 relay operation, so that the network side device subsequently establishes a corresponding transmission pipeline, allocates a resource, and the like for the remote terminal based on the requirement. In the case of the L3 relay operation, there is no direct RRC connection between the remote terminal and the network side device, so that the relay terminal needs to initiate a relay request to the network side device on behalf of the remote terminal. Similarly, the relay terminal also has an L3 relay requirement carried in the request, so that the network side device establishes a corresponding transmission pipeline, allocates a resource, and the like for the remote terminal based on the requirement.

Specifically, for the L2 relay operation, because there is an RRC connection between the remote terminal and the network, the remote terminal sends, through RRC signaling of the remote terminal (the signaling is relayed through the relay terminal), a request for the relay operation selected by the remote terminal to the network. Then, the network side device delivers a corresponding reconfiguration message (which, for the remote terminal, mainly includes an SLRB configuration and an RLC bearer configuration between the remote terminal and the relay terminal), so that a bearer configuration corresponding to the selected relay operation is established based on the reconfiguration message. At the same time, the relay terminal also has to take actions in this procedure. To be specific, the relay terminal sends the request for the relay operation to the network through RRC signaling of the relay terminal, receives the corresponding reconfiguration message (which, for the relay terminal, includes the RLC bearer configuration between the remote terminal and the relay terminal and an RLC bearer configuration between the relay terminal and the network) delivered by the network, and establishes an RLC bearer with the remote terminal and an RLC bearer with the network based on the configurations.

Specifically, for the L3 relay operation, because there is not necessarily an RRC connection between the remote terminal and the network, the relay terminal sends a relay operation request to the network, and the network delivers a corresponding reconfiguration message (mainly including an L3+L2 protocol stack configuration of a Uu bearer of the relay terminal and an L3+L2 protocol stack configuration of a bearer between the relay terminal and the remote terminal).

It should be noted that in the foregoing process, L2 and L3 relay operations can be distinguished without using an explicit field. This is because L2 and L3 relay operations have significant differences in architectures and signaling processes, where in the L2 relay operation, the remote terminal autonomously establishes RRC to communicate with the network, and in the L3 relay operation, only the relay terminal has an RRC connection. Therefore, through different signaling processes, the network can know a specific architecture for the currently requested relay, for example, an L2 relay configuration requested by the RRC signaling of the remote terminal (the signaling of the remote terminal is relayed to the network through the relay terminal), or an L3 relay configuration requested by the RRC signaling of the relay terminal (the relay terminal has its own signaling radio bearer SRB for signaling transmission).

In conclusion, in this embodiment of this application, in a case that at least one relay operation is present, the terminal selects, based on the relay configuration information sent by the network side device, a corresponding relay operation for transmission. In this way, features of different relay operations are fully utilized, which ensures quality of service QoS of service of the remote terminal and also optimizes transmission efficiency, thereby improving user experience and guaranteeing system efficiency. In a case that at least two relay operations are present, the network side indicates the relay operation type supported by the network side. Then, an appropriate relay operation is selected based on the service information or the capability of the relay terminal, to carry data of the remote terminal. This can fully exert advantages of various relay operations and avoid disadvantages, thus making a system more flexible and improving system performance and user experience.

It should be noted that the relay determining method provided in the embodiments of this application may be performed by a relay determining apparatus, or by a control module in such relay determining apparatus for performing or loading the relay determining method. The relay determining apparatus performing the relay determining method is used as an example in the embodiments of this application, to describe the relay determining apparatus provided in the embodiments of the application.

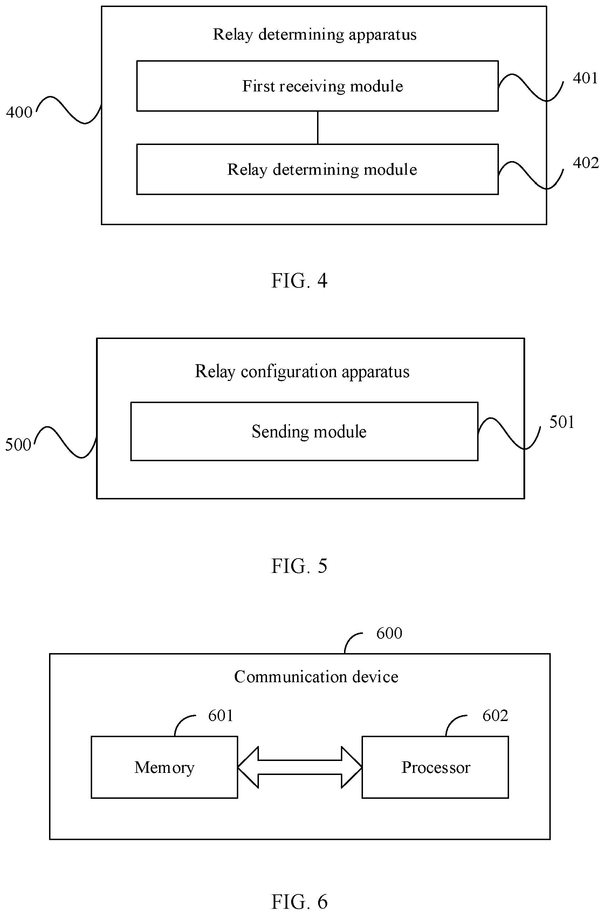

As shown in FIG. 4, an embodiment of this application provides a relay determining apparatus 400, applied to a remote terminal and including:
a first receiving module 401, configured to receive relay configuration information, the relay configuration information including a configuration parameter for at least one relay operation; and
a relay determining module 402, configured to determine, based on the relay configuration information, a relay operation to be used.

In an optional embodiment, the apparatus further includes:
a type determining module, configured to determine, based on the configuration parameter for the relay operation, that a network side device supports a relay operation type corresponding to the configuration parameter;
or the relay configuration information further includes a first indication field for indicating the relay operation type supported by the network side device.

In an optional embodiment, the configuration parameter for the relay operation includes at least one of the following:
first condition information under which a remote terminal is allowed to use the relay operation;
bearer configuration information with which the remote terminal uses the relay operation; or
second condition information for selecting the relay operation when the remote terminal selects a relay operation for data transmission.

In an optional embodiment, the second condition information includes at least one of the following:
service information;
link information;
association information of the remote terminal and a relay terminal; or
relay operation selection policy.

In an optional embodiment, the service information includes at least one of the following:
quality of service QoS requirement for a service;
latency information of the service;
block error rate of the service;
duration of the service;
security requirement for the service; or
continuity requirement for the service.

In an optional embodiment, the link information includes at least one of the following:
link condition information of a Uu interface of the relay terminal;
link condition information of a Uu interface of the remote terminal; or
link condition information of a PC5 interface between the remote terminal and the relay terminal.

In an optional embodiment, when the relay configuration information includes configuration parameters for two or more relay operations,
the relay determining module includes:
a relay determining submodule, configured to select, based on the relay configuration information and a target parameter, one relay operation from the two or more relay operations as the relay operation to be used.

In an optional embodiment, the target parameter includes at least one of the following:
service information of the remote terminal;
capability information of the relay terminal; or
association information of the remote terminal and the relay terminal.

In an optional embodiment, the apparatus further includes:
a broadcasting module, configured to broadcast the relay operation to be used; and
a response receiving module, configured to receive a response message from a terminal that supports the relay operation, and determine the terminal that sends the response message as a relay terminal.

In an optional embodiment, the apparatus further includes:
a broadcast receiving module, configured to receive second indication information broadcast by another terminal, where the second indication information is used to indicate a relay operation type supported by the another terminal; and
a selection module, configured to select, based on the second indication information, a terminal that supports the relay operation to be used as a relay terminal.

In an optional embodiment, the apparatus further includes:
a first message sending module, configured to send a first message to the network side device, where alternatively, the relay terminal sends a second message to the network side device, and the first message or the second message carries request information for the relay operation to be used;
a reconfiguration receiving module, configured to receive a reconfiguration message sent by the network side device or the relay terminal; and
a bearer establishment module, configured to establish a bearer corresponding to the requested relay operation based on the reconfiguration message.

In an optional embodiment, the apparatus further includes:
a transmission module, configured to perform, based on the established bearer, related transmission corresponding to the relay operation.

In an optional embodiment, the apparatus further includes at least one of the following modules:
a second message sending module, configured to send a third PC5 RRC message to the relay terminal during establishment of a radio resource control RRC connection to the relay terminal, where the third PC5 RRC message explicitly or implicitly indicates the relay operation to be used, and the third PC5 RRC message further carries bearer configuration information of the relay operation;
a third message sending module, configured to send, by the relay terminal, a fourth PC5 RRC message to another remote terminal during establishment of an RRC connection between the relay terminal and the another remote terminal, where the fourth PC5 RRC message explicitly or implicitly indicates the relay operation to be used, and the fourth PC5 RRC message further carries bearer configuration information of the relay operation; or
a fourth message sending module configured to send a fifth PC5 RRC message to another remote terminal during establishment of an RRC connection to the another remote terminal, where the fifth PC5 RRC message explicitly or implicitly indicates the relay operation to be used, and the fifth PC5 RRC message further carries bearer configuration information of the relay operation.

In an optional embodiment, the relay operation includes at least one of the following:
an L2 relay operation; or
an L3 relay operation.

In an optional embodiment, the L3 relay operation includes:
an L3 relay protocol stack, where a user-plane session of the remote terminal is established by the network side device and a core network node of the relay terminal;
   and/or
an L3 relay protocol stack, where a user-plane session of the remote terminal is established by the network side device and a core network node of the remote terminal.

In this embodiment of this application, in a case that at least one relay operation is present, the terminal selects, based on the relay configuration information sent by the network side device, a corresponding relay operation for transmission. In this way, features of different relay operations are fully utilized, which ensures quality of service QoS of service of the remote terminal and also optimizes transmission efficiency, thereby improving user experience and guaranteeing system efficiency. In a case that at least two relay operations are present, the network side indicates the relay operation type supported by the network side. Then, an appropriate relay operation is selected based on the service information or a capability of the relay terminal, to carry data of the remote terminal. This can fully exert advantages of various relay operations and avoid disadvantages, thus making a system more flexible and improving system performance and user experience.

It should be noted that the relay configuration method provided in the embodiments of this application may be performed by a relay configuration apparatus, or by a control module in such relay configuration apparatus for performing or loading the relay configuration method. The relay configuration apparatus performing the relay configuration method is used as an example in the embodiments of this application, to describe the relay configuration apparatus provided in the embodiments of the application.

As shown in FIG. 5, an embodiment of this application provides a relay configuration apparatus 500, applied to a network side device and including:
a sending module 501, configured to send relay configuration information, the relay configuration information including a configuration parameter for at least one relay operation.

In an optional embodiment, the apparatus further includes:
an indication module, configured to indicate, by using the configuration parameter for the relay operation, that the network side device supports a relay operation type corresponding to the configuration parameter;
or the relay configuration information further includes a first indication field for indicating the relay operation type supported by the network side device.

In an optional embodiment, the configuration parameter for the relay operation includes at least one of the following:
first condition information under which a remote terminal is allowed to use the relay operation;
bearer configuration information with which the remote terminal uses the relay operation; or
second condition information for selecting the relay operation when the remote terminal selects a relay operation for data transmission.

In an optional embodiment, the second condition information includes at least one of the following:
service information;
link information;
association information of the remote terminal and a relay terminal; or
relay operation selection policy.

In an optional embodiment, the service information includes at least one of the following:
quality of service QoS requirement for a service;
latency information of the service;
block error rate of the service;
duration of the service;
security requirement for the service; or
continuity requirement for the service.

In an optional embodiment, the link information includes at least one of the following:
link condition information of a Uu interface of the relay terminal;
link condition information of a Uu interface of the remote terminal; or
link condition information of a PC5 interface between the remote terminal and the relay terminal.

In an optional embodiment, the apparatus further includes:
a message receiving module, configured to receive a first message sent by the remote terminal, or receive a second message from the relay terminal selected by the remote terminal, where the first message or the second message carries request information for a relay operation to be used as determined by the remote terminal; and
a configuration sending module, configured to send a reconfiguration message to the remote terminal or the relay terminal, where the reconfiguration message is used to instruct the remote terminal to establish a bearer corresponding to the requested relay operation.

In an optional embodiment, the relay operation includes at least one of the following:
an L2 relay operation; or
an L3 relay operation.

In an optional embodiment, the L3 relay operation includes:
an L3 relay protocol stack, where a user-plane session of the remote terminal is established by the network side device and a core network node of the relay terminal;
   and/or
an L3 relay protocol stack, where a user-plane session of the remote terminal is established by the network side device and a core network node of the remote terminal.

In this embodiment of this application, in a case that at least one relay operation is present, the terminal selects, based on the relay configuration information sent by the network side device, a corresponding relay operation for transmission. In this way, features of different relay operations are fully utilized, which ensures quality of service QoS of service of the remote terminal and also optimizes transmission efficiency, thereby improving user experience and guaranteeing system efficiency. In a case that at least two relay operations are present, the network side indicates the relay operation type supported by the network side. Then, an appropriate relay operation is selected based on the service information or a capability of the relay terminal, to carry data of the remote terminal. This can fully exert advantages of various relay operations and avoid disadvantages, thus making a system more flexible and improving system performance and user experience.

The relay determining apparatus or the relay configuration device in the embodiments of this application may be a component, an integrated circuit, or a chip in a terminal. The apparatus may be a mobile electronic device or a non-mobile electronic device. For example, the mobile electronic device may be a mobile phone, a tablet computer, a laptop computer, a palmtop computer, an in-vehicle electronic device, a wearable device, an ultra-mobile personal computer (ultra-mobile personal computer, UMPC), a netbook, a personal digital assistant (personal digital assistant, PDA), or the like. The non-mobile electronic device may be a server, a network attached storage (Network Attached Storage, NAS), a personal computer (personal computer, PC), a television (television, TV), an automated teller machine or a self-service machine, or the like. This is not specifically limited in the embodiments of this application.

The relay determining apparatus or the relay configuration device in the embodiments of this application may be an apparatus having an operating system. The operating system may be an Android (Android) operating system, an iOS operating system, or other possible operating systems. This is not specifically limited in the embodiments of this application.

The relay determining apparatus or the relay configuration device provided in the embodiments of this application can implement the processes implemented in the method embodiments of FIG. 2 and FIG. 3. Details are not described herein again to avoid repetition.

Optionally, as shown in FIG. 6, an embodiment of this application further provides a communication device 600 including a processor 601, a memory 602, and a program or instructions stored in the memory 602 and executable on the processor 601. For example, when the communication device 600 is a terminal, the program or instructions are executed by the processor 601 to implement the processes of the foregoing relay determining method embodiments, with same technical effects achieved. When the communication device 600 is a network side device, the program or instructions are executed by the processor 601 to implement the processes of the foregoing relay configuration method embodiment, with same technical effects achieved. Details are not described herein again to avoid repetition.

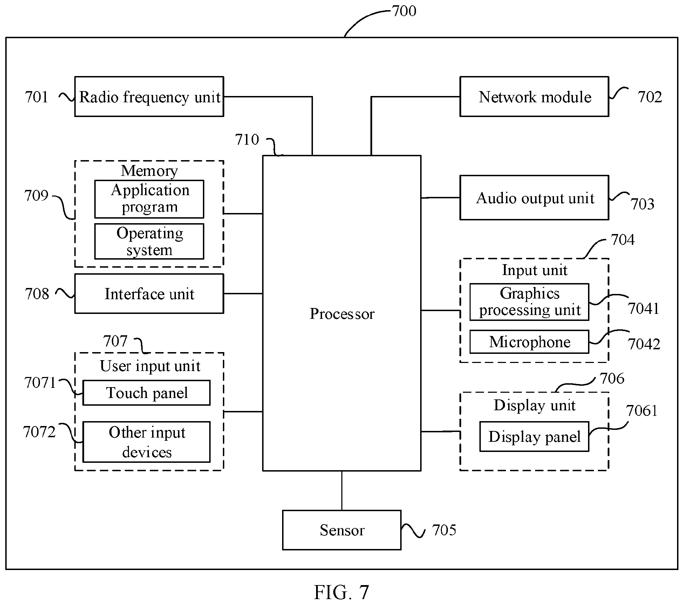

FIG. 7 is a schematic diagram of a hardware structure of a terminal for implementing the embodiments of this application. The terminal 700 includes but is not limited to components such as a radio frequency unit 701, a network module 702, an audio output unit 703, an input unit 704, a sensor 705, a display unit 706, a user input unit 707, an interface unit 708, a memory 709, and a processor 710.

A person skilled in the art can understand that the terminal 700 may further include a power supply (for example, a battery) supplying power to all components, and the power supply may be logically connected to the processor 710 through a power management system. In this way, functions such as charge management, discharge management, and power consumption management are implemented by using the power management system. The structure of the terminal shown in FIG. 7 does not constitute any limitation on the terminal. The terminal may include more or fewer components than those shown in the figure, or a combination of some components, or the components disposed differently. Details are not repeated herein.

It should be understood that in this embodiment of this application, the input unit 704 may include a graphics processing unit (Graphics Processing Unit, GPU) 7041 and a microphone 7042. The graphics processing unit 7041 processes image data of a still picture or video obtained by an image capture apparatus (such as a camera) in a video capture mode or an image capture mode. The display unit 706 may include a display panel 7061. The display panel 7061 may be configured in a form of a liquid crystal display, an organic light emitting diode, or the like. The user input unit 707 may include a touch panel 7071 and other input devices 7072. The touch panel 7071 is also referred to as a touchscreen. The touch panel 7071 may include two parts: a touch detection apparatus and a touch controller. The other input devices 7072 may include but are not limited to a physical keyboard, a function key (such as a volume control key or a power on/off key), a trackball, a mouse, a joystick, and the like. Details are not described herein.

In this embodiment of this application, the radio frequency unit 701 receives downlink data from a network side device, and transmits the downlink data to the processor 710 for processing; and transmits uplink data to the network side device. Generally, the radio frequency unit 701 includes but is not limited to an antenna, at least one amplifier, a transceiver, a coupler, a low noise amplifier, a duplexer, and the like.

The memory 709 may be configured to store software programs or instructions and various data. The memory 709 may mainly include a program/instruction storage area and a data storage area. The program/instruction storage area may store an operating system, an application program or instruction required by at least one function (for example, a sound playback function or an image playback function), and the like. In addition, the memory 709 may include a high-speed random access memory, or may include a non-volatile memory. The non-volatile memory may be a read-only memory (Read-Only Memory, ROM), a programmable read-only memory (Programmable ROM, PROM), an erasable programmable read-only memory (Erasable PROM, EPROM), and an electrically erasable programmable read-only memory (Electrically EPROM, EEPROM), or a flash memory, for example, at least one disk storage device, a flash memory device, or other non-volatile solid state storage devices.

The processor 710 may include one or more processing units. Optionally, an application processor and a modem processor may be integrated in the processor 710. The application processor primarily processes an operating system, user interfaces, application programs or instructions, and the like. The modem processor primarily processes radio communication, such as a baseband processor. It can be understood that the modem processor may alternatively be not integrated in the processor 710.

The radio frequency unit 701 is configured to receive relay configuration information, the relay configuration information including a configuration parameter for at least one relay operation.

The processor 710 is configured to determine, based on the relay configuration information, a relay operation to be used.

In this embodiment of this application, in a case that at least one relay operation is present, the terminal selects, based on the relay configuration information sent by the network side device, a corresponding relay operation for transmission. In this way, features of different relay operations are fully utilized, which ensures quality of service QoS of service of a remote terminal and also optimizes transmission efficiency, thereby improving user experience and guaranteeing system efficiency. In a case that at least two relay operations are present, the network side indicates a relay operation type supported by the network side. Then, an appropriate relay operation is selected based on service information or a capability of the relay terminal, to carry data of the remote terminal. This can fully exert advantages of various relay operations and avoid disadvantages, thus making a system more flexible and improving system performance and user experience.

It should be noted that the terminal provided in the embodiments of this application is a terminal capable of executing the foregoing relay determining method, and all embodiments of the foregoing relay determining method are applicable to the terminal, with the same or similar beneficial effects achieved.

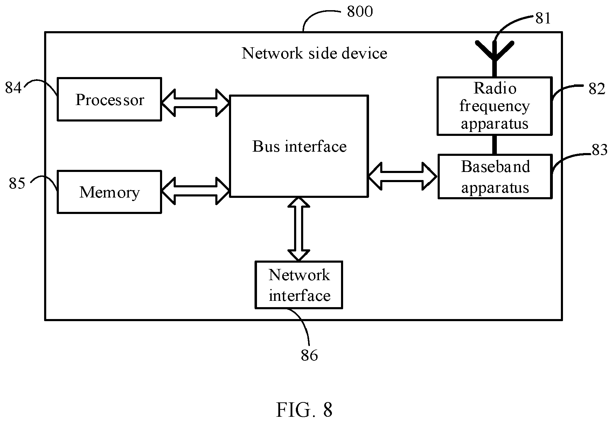

Specifically, an embodiment of this application further provides a network side device. As shown in FIG. 8, the network device 800 includes an antenna 81, a radio frequency apparatus 82, and a baseband apparatus 83. The antenna 81 is connected to the radio frequency apparatus 82. In an uplink direction, the radio frequency apparatus 82 receives information by using the antenna 81, and transmits the received information to the baseband apparatus 83 for processing. In a downlink direction, the baseband apparatus 83 processes to-be-sent information, and sends the information to the radio frequency apparatus 82; and the radio frequency apparatus 82 processes the received information and then sends the information out by using the antenna 81.

The band processing apparatus may be located in the baseband apparatus 83. The method performed by the network side device in the foregoing embodiment may be implemented in the baseband apparatus 83, and the baseband apparatus 83 includes a processor 84 and a memory 85.

The baseband apparatus 83 may include, for example, at least one baseband processing unit, where a plurality of chips are disposed on the baseband processing unit. As shown in FIG. 8, one of the chips is, for example, the processor 84, connected to the memory 85, to invoke a program in the memory 85 to perform the operation of the network device shown in the foregoing method embodiment.

The baseband apparatus 83 may further include a network interface 86, configured to exchange information with the radio frequency apparatus 82, where the interface is, for example, a common public radio interface (common public radio interface, CPRI).

Specifically, the network side device in this embodiment of this application further includes instructions or a program stored in the memory 85 and executable on the processor 84. The processor 84 invokes the instructions or program in the memory 85 to perform the method executed by the modules shown in FIG. 5, with the same technical effects achieved. Details are not described herein again to avoid repetition.

An embodiment of this application further provides a readable storage medium, where a program or an instruction is stored in the readable storage medium. When the program or instruction is executed by a processor, the processes of the foregoing embodiments of the relay determining method or the relay configuration method can be implemented, with the same technical effects achieved. To avoid repetition, details are not described herein again.

The processor is a processor in the electronic device described in the foregoing embodiment. The readable storage medium includes a computer-readable storage medium, for example, a computer read-only memory (Read-Only Memory, ROM), a random access memory (Random Access Memory, RAM), a magnetic disk, or an optical disc.

An embodiment of this application further provides a chip, where the chip includes a processor and a communications interface, the communications interface is coupled to the processor, and the processor is configured to run a program or an instruction to implement the processes of the foregoing embodiments of the relay determining method or the relay configuration method, with the same technical effects achieved. To avoid repetition, details are not repeated herein.

It should be understood that the chip mentioned in this embodiment of this application may also be referred to as a system-on-chip, a system chip, a system-on-a-chip, or a system on a chip, or the like.

It should be noted that in this specification, the term "comprise", "include", or any of their variants are intended to cover a non-exclusive inclusion, so that a process, a method, an article, or an apparatus that includes a list of elements not only includes those elements but also includes other elements that are not expressly listed, or further includes elements inherent to such process, method, article, or apparatus. In absence of more constraints, an element preceded by "includes a ..." does not preclude existence of other identical elements in the process, method, article, or apparatus that includes the element. Furthermore, it should be noted that, in the scope of the method and apparatus in the embodiments of this application, execution of the functions are not limited to the order shown or described, and the functions may alternatively be executed in a substantially simultaneous manner or in a reverse order. For example, the described method may be performed in an order different from that described, and steps may be added, omitted, or combined. In addition, features described with reference to some examples may be combined in other examples.

A person of ordinary skill in the art may be aware that the units and algorithm steps in the examples described with reference to the embodiments disclosed in this specification can be implemented by electronic hardware or a combination of computer software and electronic hardware. Whether the functions are performed by hardware or software depends on particular applications and design constraints of the technical solutions. A person skilled in the art may use different methods to implement the described functions for each particular application, but it should not be considered that the implementation goes beyond the scope of this disclosure.

It may be clearly understood by a person skilled in the art that, for the purpose of convenient and brief description, for a detailed working process of the foregoing system, apparatus, and unit, reference may be made to a corresponding process in the foregoing method embodiments, and details are not described again herein.

In the embodiments provided in this application, it should be understood that the disclosed apparatus and method may be implemented in other manners. For example, the described apparatus embodiment is merely an example. For example, the unit division is merely logical function division and may be other division in actual implementation. For example, a plurality of units or components may be combined or integrated into another system, or some features may be ignored or may not be performed. In addition, the displayed or discussed mutual couplings or direct couplings or communication connections may be implemented by using some interfaces. The indirect couplings or communication connections between the apparatuses or units may be implemented in electronic, mechanical, or other forms.

The units described as separate parts may or may not be physically separate, and parts displayed as units may or may not be physical units, may be located in one position, or may be distributed on a plurality of network elements. Some or all of the units may be selected based on actual requirements to achieve the objectives of the solutions of the embodiments.

In addition, functional units in the embodiments of this disclosure may be integrated into one processing unit, or each of the units may exist alone physically, or two or more units are integrated into one unit.

According to the description of the foregoing implementations, persons skilled in the art can clearly understand that the method in the foregoing embodiments may be implemented by software in addition to a necessary universal hardware platform or by hardware only. In most cases, the former is a more preferred implementation. Based on such an understanding, the technical solutions of this application essentially or the part contributing to the prior art may be implemented in a form of a software product. The software product is stored in a storage medium (such as a ROM/RAM, a magnetic disk, or an optical disc), and includes several instructions for instructing a terminal (which may be a mobile phone, a computer, a server, an air conditioner, a network device, or the like) to perform the methods described in the embodiments of this application.

A person of ordinary skill in the art may understand that all or some of the processes of the methods in the embodiments may be implemented by a computer program controlling relevant hardware. The program may be stored in a computer-readable storage medium. When the program runs, the processes of the method embodiments may be included. The foregoing storage medium may be a magnetic disk, an optical disc, a read-only memory (Read-Only Memory, ROM), a random access memory (Random Access Memory, RAM), or the like.

It can be understood that the embodiments described in this disclosure may be implemented by hardware, software, firmware, middleware, microcode, or a combination thereof. For hardware implementation, a module, a unit, a sub-unit, a sub-module, and the like may be implemented in one or more application-specific integrated circuits (Application Specific Integrated Circuit, ASIC), digital signal processors (Digital Signal Processor, DSP), digital signal processing devices (DSP Device, DSPD), programmable logic devices (Programmable Logic Device, PLD), field-programmable gate arrays (Field-Programmable Gate Array, FPGA), general-purpose processors, controllers, microcontrollers, microprocessors, and other electronic units for performing the functions described in this disclosure, or a combination thereof.

For software implementation, the techniques described in the embodiments of this disclosure may be implemented by modules (such as processes and functions) that perform the functions described in the embodiments of this disclosure. Software code may be stored in the memory and executed by the processor. The memory may be implemented in or outside the processor.

The foregoing describes the embodiments of this application with reference to the accompanying drawings. However, this application is not limited to the foregoing specific embodiments. The foregoing specific embodiments are merely illustrative rather than restrictive. As instructed by this application, persons of ordinary skill in the art may develop many other manners without departing from principles of this application and the protection scope of the claims, and all such manners fall within the protection scope of this application.

The foregoing descriptions are merely specific implementations of this application, but are not intended to limit the protection scope of this application. Any variation or replacement readily figured out by a person skilled in the art within the technical scope disclosed in this application shall fall within the protection scope of this application. Therefore, the protection scope of this application shall be subject to the protection scope of the claims.

## Claims

1. A relay determining method, applied to a remote terminal and comprising:
receiving relay configuration information, the relay configuration information comprising a configuration parameter for at least one relay operation; and
determining, based on the relay configuration information, a relay operation to be used.

2. The method according to claim 1, further comprising:
determining, based on the configuration parameter for the relay operation, that a network side device supports a relay operation type corresponding to the configuration parameter;
or the relay configuration information further comprises a first indication field for indicating the relay operation type supported by the network side device.

3. The method according to claim 1, wherein the configuration parameter for the relay operation comprises at least one of the following:
first condition information under which the remote terminal is allowed to use the relay operation;
bearer configuration information with which the remote terminal uses the relay operation; or
second condition information for selecting the relay operation when the remote terminal selects a relay operation for data transmission.

4. The method according to claim 3, wherein the second condition information comprises at least one of the following:
service information;
link information;
association information of the remote terminal and a relay terminal; or
relay operation selection policy.

5. The method according to claim 4, wherein the service information comprises at least one of the following:
quality of service QoS requirement for a service;
latency information of the service;
block error rate of the service;
duration of the service;
security requirement for the service; or
continuity requirement for the service.

6. The method according to claim 4, wherein the link information comprises at least one of the following:
link condition information of a Uu interface of the relay terminal;
link condition information of a Uu interface of the remote terminal; or
link condition information of a PC5 interface between the remote terminal and the relay terminal.

7. The method according to claim 1, wherein when the relay configuration information comprises configuration parameters for two or more relay operations, the determining, based on the relay configuration information, a relay operation to be used comprises:
selecting, based on the relay configuration information and a target parameter, one relay operation from the two or more relay operations as the relay operation to be used.

8. The method according to claim 7, wherein the target parameter comprises at least one of the following:
service information of the remote terminal;
capability information of a relay terminal; or
association information of the remote terminal and the relay terminal.

9. The method according to claim 1, further comprising:
broadcasting the relay operation to be used; and
receiving a response message from a terminal that supports the relay operation, and determining the terminal that sends the response message as a relay terminal.

10. The method according to claim 1, further comprising:
receiving second indication information broadcast by another terminal, wherein the second indication information is used to indicate a relay operation type supported by the another terminal; and
selecting, based on the second indication information, a terminal that supports the relay operation to be used as a relay terminal.

11. The method according to claim 9 or 10, further comprising:
sending a first message to a network side device, or sending, by the relay terminal, a second message to a network side device, wherein the first message or the second message carries request information for the relay operation to be used;
receiving a reconfiguration message sent by the network side device or the relay terminal; and
establishing a bearer corresponding to the requested relay operation based on the reconfiguration message.

12. The method according to claim 11, further comprising:
performing, based on the established bearer, related transmission corresponding to the relay operation.

13. The method according to claim 9 or 10, further comprising at least one of the following steps:
sending a third PC5 RRC message to the relay terminal during establishment of a radio resource control RRC connection to the relay terminal, wherein the third PC5 RRC message explicitly or implicitly indicates the relay operation to be used, and the third PC5 RRC message further carries bearer configuration information of the relay operation;
sending, by the relay terminal, a fourth PC5 RRC message to another remote terminal during establishment of an RRC connection between the relay terminal and the another remote terminal, wherein the fourth PC5 RRC message explicitly or implicitly indicates the relay operation to be used, and the fourth PC5 RRC message further carries bearer configuration information of the relay operation; or
sending a fifth PC5 RRC message to another remote terminal during establishment of an RRC connection to the another remote terminal, wherein the fifth PC5 RRC message explicitly or implicitly indicates the relay operation to be used, and the fifth PC5 RRC message further carries bearer configuration information of the relay operation.

14. The method according to claim 1, wherein the relay operation comprises at least one of the following:
an L2 relay operation; or
an L3 relay operation.

15. The method according to claim 14, wherein the L3 relay operation comprises:
an L3 relay protocol stack, wherein a user-plane session of the remote terminal is established by a network side device and a core network node of a relay terminal;
and/or
an L3 relay protocol stack, wherein a user-plane session of the remote terminal is established by a network side device and a core network node of the remote terminal.

16. A relay configuration method, applied to a network side device and comprising:
sending relay configuration information, the relay configuration information comprising a configuration parameter for at least one relay operation.

17. The method according to claim 16, wherein the method further comprises:
indicating, by using the configuration parameter for the relay operation, that the network side device supports a relay operation type corresponding to the configuration parameter;
or the relay configuration information further comprises a first indication field for indicating the relay operation type supported by the network side device.

18. The method according to claim 16, wherein the configuration parameter for the relay operation comprises at least one of the following:
first condition information under which a remote terminal is allowed to use the relay operation;
bearer configuration information with which the remote terminal uses the relay operation; or
second condition information for selecting a relay operation when the remote terminal selects a relay operation for data transmission.

19. The method according to claim 18, wherein the second condition information comprises at least one of the following:
service information;
link information;
association information of the remote terminal and a relay terminal; or
relay operation selection policy.

20. The method according to claim 19, wherein the service information comprises at least one of the following:
quality of service QoS requirement for a service;
latency information of the service;
block error rate of the service;
duration of the service;
security requirement for the service; or
continuity requirement for the service.

21. The method according to claim 19, wherein the link information comprises at least one of the following:
link condition information of a Uu interface of the relay terminal;
link condition information of a Uu interface of the remote terminal; or
link condition information of a PC5 interface between the remote terminal and the relay terminal.

22. The method according to any one of claims 16 to 21, further comprising:
receiving a first message sent by the remote terminal, or receiving a second message from the relay terminal selected by the remote terminal, wherein the first message or the second message carries request information for a relay operation to be used as determined by the remote terminal; and
sending a reconfiguration message to the remote terminal or the relay terminal, wherein the reconfiguration message is used to instruct the remote terminal to establish a bearer corresponding to the requested relay operation.

23. The method according to any one of claims 16 to 21, wherein the relay operation comprises at least one of the following:
an L2 relay operation; or
an L3 relay operation.

24. The method according to claim 23, wherein the L3 relay operation comprises:
an L3 relay protocol stack, wherein a user-plane session of the remote terminal is established by the network side device and a core network node of the relay terminal;
and/or
an L3 relay protocol stack, wherein a user-plane session of the remote terminal is established by the network side device and a core network node of the remote terminal.

25. A relay determining apparatus, applied to a remote terminal and comprising:
a first receiving module, configured to receive relay configuration information, the relay configuration information comprising a configuration parameter for at least one relay operation; and
a relay determining module, configured to determine, based on the relay configuration information, a relay operation to be used.

26. The apparatus according to claim 25, wherein the apparatus further comprises:
a type determining module, configured to determine, based on the configuration parameter for the relay operation, that a network side device supports a relay operation type corresponding to the configuration parameter;
or the relay configuration information further comprises a first indication field for indicating the relay operation type supported by the network side device.

27. The apparatus according to claim 25, wherein the configuration parameter for the relay operation comprises at least one of the following:
first condition information under which a remote terminal is allowed to use the relay operation;
bearer configuration information with which the remote terminal uses the relay operation; or
second condition information for selecting a relay operation when the remote terminal selects a relay operation for data transmission.

28. A relay configuration apparatus, applied to a network side device and comprising:
a sending module, configured to send relay configuration information, the relay configuration information comprising a configuration parameter for at least one relay operation.

29. The apparatus according to claim 28, wherein the apparatus further comprises:
indicating, by using the configuration parameter for the relay operation, that the network side device supports a relay operation type corresponding to the configuration parameter;
or the relay configuration information further comprises a first indication field for indicating the relay operation type supported by the network side device.

30. The apparatus according to claim 28, wherein the configuration parameter for the relay operation comprises at least one of the following:
first condition information under which a remote terminal is allowed to use the relay operation;
bearer configuration information with which the remote terminal uses the relay operation; or
second condition information for selecting a relay operation when the remote terminal selects a relay operation for data transmission.

31. A terminal, comprising a processor, a memory, and a program or instructions stored in the memory and executable on the processor, wherein when the program or instructions are executed by the processor, the steps of the relay determining method according to any one of claims 1 to 15 are implemented.

32. A network side device, comprising a processor, a memory, and a program or instructions stored in the memory and executable on the processor, wherein when the program or instructions are executed by the processor, the steps of the relay configuration method according to any one of claims 16 to 24 are implemented.

33. A readable storage medium, wherein the readable storage medium stores a program or instructions, and when the program or instructions are executed by a processor, the steps of the relay determining method according to any one of claims 1 to 15 are implemented; or when the program or instructions are executed by a processor, the steps of the relay configuration method according to any one of claims 16 to 24 are implemented.

34. A chip, wherein the chip comprises a processor and a communication interface, the communication interface is coupled to the processor, and the processor is configured to run a program or instructions of a network side device to implement the relay determining method according to any one of claims 1 to 15, or implement the relay configuration method according to any one of claims 16 to 24.

35. A computer software product, wherein the computer software product is stored in a non-volatile storage medium, and the software product is configured to be executed by at least one processor to implement the steps of the relay determining method according to any one of claims 1 to 15 or the steps of the relay configuration method according to any one of claims 16 to 24.

36. A communication device, wherein the communication device is configured to perform the relay determining method according to any one of claims 1 to 15, or perform the relay configuration method according to any one of claims 16 to 24.
